# EUROPEAN PATENT APPLICATION

(11) **EP 1 610 568 A2**
(43) Date of publication of application: **28.12.2005**
(21) Application number: 05291324.1
(22) Date of filing: 21.06.2005
(51) Int. Cl.: H04N 9/73

(54) **Image pickup apparatus having white balance control function**

(30) Priority: 22.06.2004 JP 2004183517
(71) Applicant: SONY CORPORATION, Tokyo (JP)
(72) Inventor: Hideho, Une, c/o Sony Corporation, Tokyo (JP)
(74) Representative: Thévenet, Jean-Bruno

(57) **Abstract**

The present invention provides an image pickup apparatus capable of adjusting a white balance by adjusting a level of a chrominance signal constituting a color image. The apparatus includes gain setup means (107) setting up a limit value for a gain value which adjusts a level of the chrominance signal; gain adjusting means (108) having a black body locus, as data, which indicates a locus of a change in color temperature of a full radiator on a chromaticity coordinate and adjusting the gain value; and chrominance signal amplifying means (106) amplifying the chrominance signal in accordance with the adjusted gain value. When amplifying a chrominance signal exceeding a predetermined level in accordance with the set-up limit value, the gain adjusting means (108) causes the gain value of the chrominance signal amplifying means (106) applied to the chrominance signal to translate parallel along the black body locus, and adjusts to a position of the set-up limit value.

## Description

### BACKGROUND OF THE INVENTION

### 1. Field of the Invention

The present invention relates to an image pickup apparatus, in particular to an image pickup apparatus capable of capturing a natural color image which maintains a tint of a light source, in accordance with purposes of image picking-up or preferences.

### 2. Description of Related Art

In an image pickup apparatus using a related art technique, in order to prevent a tone of a captured photographic subject from changing due to a difference in a color temperature of light sources (such as sunlight, a fluorescent light, an incandescent light, etc.), there are a variety of apparatuses provided with a white balance function to adjust a level of a chrominance signal which constitutes an image signal, and to adjust a white balance according to a color of the light source.

For example, Japanese Examined Patent Application Publication No. Hei 7-8046 (pp. 3-4, FIG. 1) discloses an apparatus for performing an automatic white balance adjustment with fewer errors, by detecting, for example, only a signal of a portion that can be considered to be white among the photographic subjects being imaged, and controlling R and B signal amplification gains automatically so as to minimize a color-difference signal of the white portion, as one of the white balance adjusting method as mentioned above.

### SUMMARY OF THE INVENTION

However, in the image pickup apparatus using the related art technique, since a range of the color temperature of the light source (hereinafter, referred to as "setting range") is previously arranged, there is a problem that, for example, when an image is captured under the light source of an incandescent bulb having a low color temperature, a white photographic subject is captured as white only by an apparatus having a widely arranged color temperature range. However, in a case of using an apparatus having a narrowly arranged color temperature range, the white photographic subject is captured with a reddish tone under such a condition, while the white photographic subject is captured with a bluish tone under a shade where a color temperature is high.

Further, since the arranged color temperature range cannot be changed, there is a problem that, although a color of the photographic subject can be reproduced at a high fidelity in the case of using the apparatus having the widely arranged color temperature range, no tint of a light source color remains at all; on the other hand, in the case of the apparatus having the narrowly arranged color temperature range, a tint of the light source color remains, but the color of the photographic subject may not be expressed correctly, thus either apparatus may produce an image of an unnatural color.

Therefore, there is a problem to be solved for enabling image pickup of an image of the natural color holding the tint of the light source color in accordance with the purposes of image picking-up or preferences.

In order to solve the above-mentioned problem, the image pickup apparatus according to the present invention is to provide an image pickup apparatus capable of adjusting a white balance by adjusting a level of a chrominance signal constituting a color image. The image pickup apparatus includes: gain setup means setting up a limit value for a gain value which adjusts a level of the chrominance signal; gain adjusting means having a black body locus, as data, which indicates a locus of a change in color temperature of a full radiator on a chromaticity coordinate, and capable of adjusting the gain value; and chrominance signal amplifying means amplifying the level of the chrominance signal in accordance with the gain value adjusted by the gain adjusting means. In the image pickup apparatus, when amplifying a chrominance signal exceeding a predetermined level according to the limit value set up by the gain setting means, the gain adjusting means causes the gain value of the chrominance signal amplifying means applied to the chrominance signal to translate (move in parallel) along the black body locus on the chromaticity coordinate, and adjusts to a position to be the set-up limit value.

The image pickup apparatus may be arranged such that the gain setup means sets up either or both of the maximum value and the minimum value of the gain value, as the limit value.

In the image pickup apparatus having the structure, for adjusting the white balance, when the gain adjusting means amplifies the chrominance signal, which exceeds the predetermined level, on the basis of the limit value set up by the gain setting means, the gain value of the chrominance-signal amplifying means applied to this chrominance signal is translated parallel along the black body locus on the chromaticity coordinate and adjusted to the position to have the set-up limit value, whereby the level of the corresponding chrominance signal can be controlled and the white balance can be adjusted so as to be in a situation where the light source color is held.

In the present invention, if the predetermined setup value (limit value) is set up according to the purposes of image picking-up or preferences and according to the light source color at the time of image pickup, when adjusting the white balance, according to this setup value (limit value), the gain value applied at the time amplifying the chrominance signal exceeding the predetermined level is translated in parallel along the black body locus and adjusted so as to be the setup value (limit value), so that the level of each chrominance signal may not necessarily be the same. Further, the white balance is adjusted to be in the situation where the light source color is held, whereby there is an outstanding advantage that the image of the natural color having the tint of the light source color at the time of image pickup can be captured.

### BRIEF DESCRIPTION OF THE DRAWINGS

FIG. 1 is a block diagram showing a simplified configuration of a main part of an image pickup apparatus according to the present invention;

FIG. 2 is a flowchart showing a case of adjusting a gain value of a WB amplifier in the image pickup apparatus shown in FIG. 1 ;

FIG. 3 is an explanatory diagram schematically showing an adjusting operation in a case of limiting a gain value of a B amplifier in the image pickup apparatus shown in FIG. 1 ;

FIG. 4 is an explanatory diagram schematically showing an adjusting operation in a case of limiting a gain value of an R amplifier in the image pickup apparatus shown in FIG. 1 ;

FIG. 5 is an explanatory diagram schematically showing an adjusting operation in a case of limiting a minimum gain value of the B amplifier in the image pickup apparatus shown in FIG. 1 ;

FIG. 6 is an explanatory diagram schematically showing an adjusting operation in a case of further limiting the minimum gain value of the B amplifier in the image pickup apparatus shown in FIG. 5 ;

FIG. 7 is an explanatory diagram schematically showing an adjusting operation in a case of further limiting the minimum gain value of the B amplifier in the image pickup apparatus shown in FIG. 6 ;

FIG. 8 is an explanatory diagram schematically showing an adjusting operation in a case of limiting a maximum gain value of the B amplifier in the image pickup apparatus shown in FIG. 1 ;

FIG. 9 is an explanatory diagram schematically showing an adjusting operation in a case of further limiting the maximum gain value of the B amplifier in the image pickup apparatus shown in FIG. 8 ;

FIG. 10 is an explanatory diagram schematically showing an adjusting operation in a case of further limiting the maximum gain value of the B amplifier in the image pickup apparatus shown in FIG. 9 ;

FIG. 11 is an explanatory diagram schematically showing an adjusting operation in a case of limiting the minimum gain value and the maximum gain value of the B amplifier in the image pickup apparatus shown in FIG. 1 ;

FIG. 12 is an explanatory diagram schematically showing an adjusting operation in a case of further limiting the minimum gain value and the maximum gain value of the B amplifier in the image pickup apparatus shown in FIG. 11 ; and

FIG. 13 is an explanatory diagram schematically showing an adjusting operation in a case of further limiting the minimum gain value and the maximum gain value of the B amplifier in the image pickup apparatus shown in FIG. 12.

### DESCRIPTION OF EMBODIMENTS

Next, a preferred embodiment of the image pickup apparatus in accordance with the present invention will be described with reference to the drawings. However, the drawings are only for description and do not limit the technical scope of the present invention.

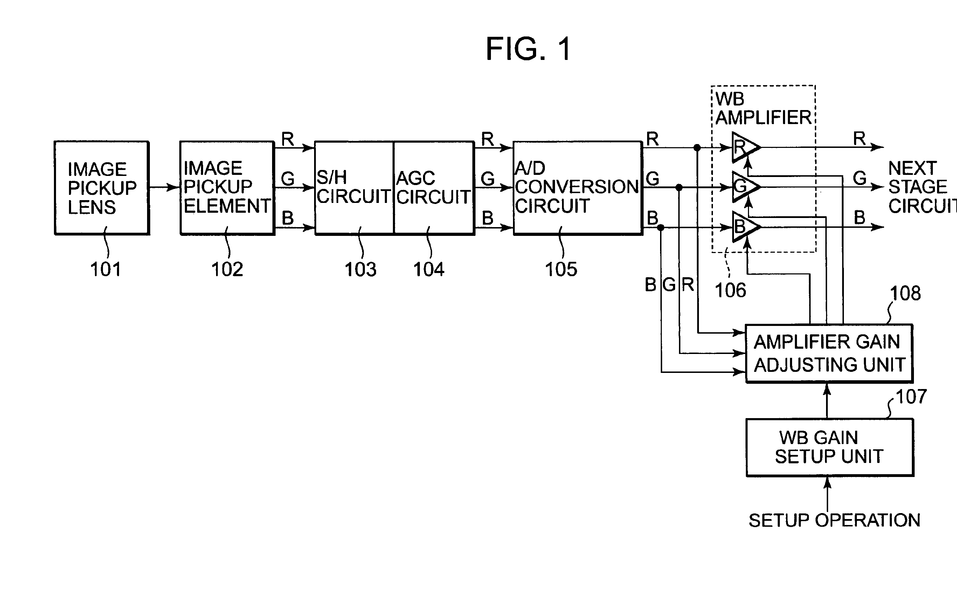

FIG. 1 is a block diagram showing a simplified structure of a principal part in the image pickup apparatus in accordance with the present invention. The apparatus includes: an image pickup lens 101, an image pickup element 102, a Sample/Hold (SH) circuit 103, an Automatic Gain Control (AGC) circuit 104, an Analog/Digital (A/D) conversion circuit 105, a white balance amplifier 106 (hereafter, referred to as WB amplifier 106), a white balance gain setup unit 107 (hereafter, referred to as WB gain setup unit 107), an amplifier gain adjusting unit 108, etc.

The image pickup element 102 is, for example, a CCD (Charge Coupled Device) where elements (pixels) for converting light into an electric signal are arranged, converts an image which is generated by the light passing the image pickup lens 101 and being focused, into an electric signal which is transmitted to the S/H circuit 103 as an analog signal.

The S/H circuit 103 samples the analog signal received from the image pickup element 102, transmits it to the AGC circuit 104, and holds the sampled value until processing in the A/D conversion circuit 105 is ended. After this processing is completed, it transmits the next sampling value to the AGC circuit 104.

The AGC circuit 104 amplifies the analog signal sampled in the S/H circuit 103, and transmits it to the A/D conversion circuit 105.

The A/D conversion circuit 105 converts the analog signal amplified in the AGC circuit 104, into digital image signals (hereafter, referred to as chrominance signal (an R signal [red], a G signal [green], a B signal [blue])) which are transmitted to the WB amplifier 106 and the amplifier gain adjusting unit 108.

The WB amplifier 106 is constituted with an R amplifier, a G amplifier, and a B amplifier which individually amplify the level of each chrominance signal, amplifies the chrominance signals (the R signal [red], the G signal [green], the B signal [blue]) received from the A/D conversion circuit 105 to a predetermined level according to the gain value adjusted by the amplifier gain adjusting unit 108, and outputs it to a next stage circuit.

In the WB gain setup unit 107, in accordance with predetermined setup operations by a user (for example, a selection operation by means of a menu panel etc.) a limit value (for example, either or both of the maximum gain value and the minimum gain value) with respect to the gain value of each amplifier (the R amplifier, the G amplifier, the B amplifier) of the WB amplifier 106 is set up.

As for a white image, the amplifier gain adjusting unit 108 adjusts each of the gain values of the R amplifier, the G amplifier, and the B amplifier of the WB amplifier 106 so that the level of each of the chrominance signals (the R signal [red], the G signal [green], the B signal [blue]) received from the A/D conversion circuit 105 may be equal.

Further, the amplifier gain adjusting unit 108 stores, in a ROM (Read Only Memory) etc., data of the black body locus used as a reference when adjusting the gain value of each amplifier. In a case where the limit value is set up by the WB gain setup unit 107, on the basis of the limit value, the amplifier gain adjusting unit 108 causes the gain values of the WB amplifier 106 (the R amplifier, the G amplifier, the B amplifier) which are applied when amplifying the chrominance signals (the R signal [red], the G signal [green], the B signal [blue]) exceeding the predetermined level, to translate parallel along the black body locus on the chromaticity coordinate, and adjusts the gain values to a position to be the set-up limit value (the maximum gain value or the minimum gain value).

In addition, the black body locus (Black Body Locus) is a locus of changes in color temperature and color in which a change in the color of light emitted from a virtual object referred to as a full radiator (black body) which absorbs energy completely as the temperature rises, is expressed on a chromaticity coordinate. The light is reddish while the color temperature is low, and changes into yellow, white, and pale as the color temperature rises. A color of a general light source (sunlight, incandescence light, etc.) exists on this black body locus.

Further, the color of the light source in which fluorescent substances are excited, such as a fluorescent light, to generate visible light is not on the black body locus, but undistinguishable, for human eyes, from the light source on the black body locus. Therefore, when redness and blueness are added to an image, a translation in the black body locus direction allows the image to have the natural color.

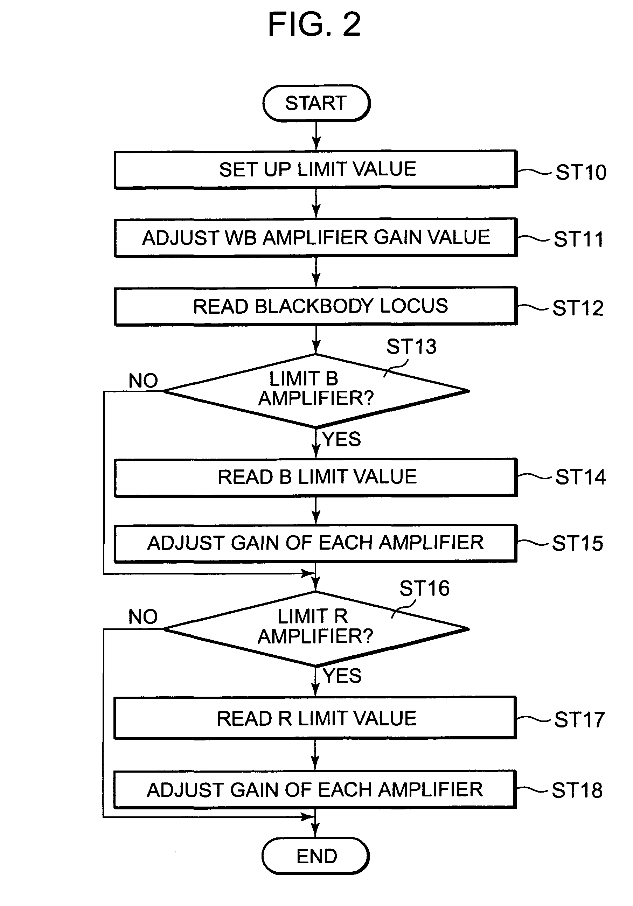

Then, at the time of adjusting the white balance, an operation when adjusting the gain value of each amplifier which constitutes the WB amplifier of the image pickup apparatus as shown in FIG. 1 will be described with reference to a flowchart of FIG. 2.

In addition, although it is possible to individually adjust the gain value of each amplifier (the R amplifier, the G amplifier, the B amplifier) in the WB amplifier 106, an example in which the gain value of the G amplifier is fixed and the gain values of the R amplifier and the B amplifier are limited will be described.

First, when predetermined setup operations (for example, selection operation by means of a menu panel etc.) are performed by the user, the limit value (either or both of the maximum gain value and the minimum gain value) for the R amplifier and the B amplifier (gain values thereof) of the WB amplifier 106 is set in the WB gain setup unit 107 (ST10).

When control for the white balance is started, an image generated such that the light passing the image pickup lens 101 is focused is converted into an electric signal by the image pickup element 102, sampled and amplified by the S/H circuit 103 and the AGC circuit 104, converted into digital chrominance signals (the R signal [red], the G signal [green], the B signal [blue]) by the A/D conversion circuit 105, and sent to the WB amplifier 106 and the amplifier gain adjusting unit 108.

As for the white image, the amplifier gain adjusting unit 108 adjusts each of the gain values of the R amplifier, the G amplifier, and the B amplifier of the WB amplifier 106 so that the level of each of the chrominance signals (the R signal [red], the G signal [green], the B signal [blue]) received from the A/D conversion circuit 105 may be equal (ST11).

Next, the amplifier gain adjusting unit 108 reads the black body locus stored in a ROM etc., as data (ST12).

Then, the amplifier gain adjusting unit 108 checks whether or not the limit value with regard to the B amplifier (i.e., a gain value thereof) is set up in the WB gain setup unit 107 (ST13).

When the limit value with regard to the B amplifier (or its gain value) is not set up, the process moves to step ST16 (ST13 -> ST16).

On the other hand, when the limit value with regard to the B amplifier (or its gain value) is set up, the amplifier gain adjusting unit 108 reads the limit value (maximum value BMAX / minimum value Bmin) set up in the WB gain setup unit 107 (ST13 -> ST14).

Further, on the basis of this limit value, the amplifier gain adjusting unit 108 causes the gain values (gain values of the R amplifier and the B amplifier) of the WB amplifier 106 applied when amplifying the chrominance signal exceeding the predetermined level, to translate parallel along the black body locus on the chromaticity coordinate, and adjusts the gain values to the position to be the set-up limit value (maximum value BMAX / minimum value Bmin) (ST15).

Next, the amplifier gain adjusting unit 108 checks whether or not the limit value with regard to the R amplifier (its gain value) is set up in the WB gain setup unit 107 (ST16).

The process ends when the limit value with regard to the R amplifier (or its gain value) is not set up (ST16 -> end).

On the other hand, when the limit value with regard to the R amplifier (its gain value) is set up, the amplifier gain adjusting unit 108 reads the limit value (maximum value RMAX / minimum value Rmin) set up in the WB gain setup unit 107 (ST16 -> ST17).

Further, on the basis of this limit value, the amplifier gain adjusting unit 108 causes the gain values (gain values of the R amplifier and the B amplifier) of the WB amplifier 106 applied when amplifying the chrominance signal exceeding the predetermined level, to translate parallel along the black body locus on the chromaticity coordinate, and adjusts the gain values to the position to be the set-up limit value (maximum value Rmax / minimum value Rmin) (ST18).

Thus, the amplifier gain adjusting unit 108 causes the gain values of the corresponding amplifiers (the B amplifier, the R amplifier) applied when amplifying the chrominance signal exceeding the predetermined level, to translate parallel along the black body locus on the chromaticity coordinate, and adjusts the gain values to the position to be the limit value set up by the WB gain setup unit 107.

Conventionally, when adjusting the white balance, the gain value of each amplifier is adjusted with respect the white photographic subject under the light source at the time of image pickup, so every level of each of the chrominance signals (the R signal [red], the G signal [green], the B signal [blue]) may become equal. However, in the present invention, since the gain value of the amplifier of the corresponding chrominance signal is caused to translate parallel along the black body locus on the chromaticity coordinate, and adjusted to the position to be the predetermined limit value, the level of each chrominance signal is not necessarily equal. However, since it is adjusted to a color corresponding to the position along the black body locus used as a reference to the change in the color of the light source, the white balance is adjusted so that the light source color may be held.

In addition, it is of course possible to set up a limit value with regard to the G amplifier. Further, in the flow chart in FIG. 2, although the processing is performed in order of the B amplifier and the R amplifier, the order of processing may be set arbitrarily.

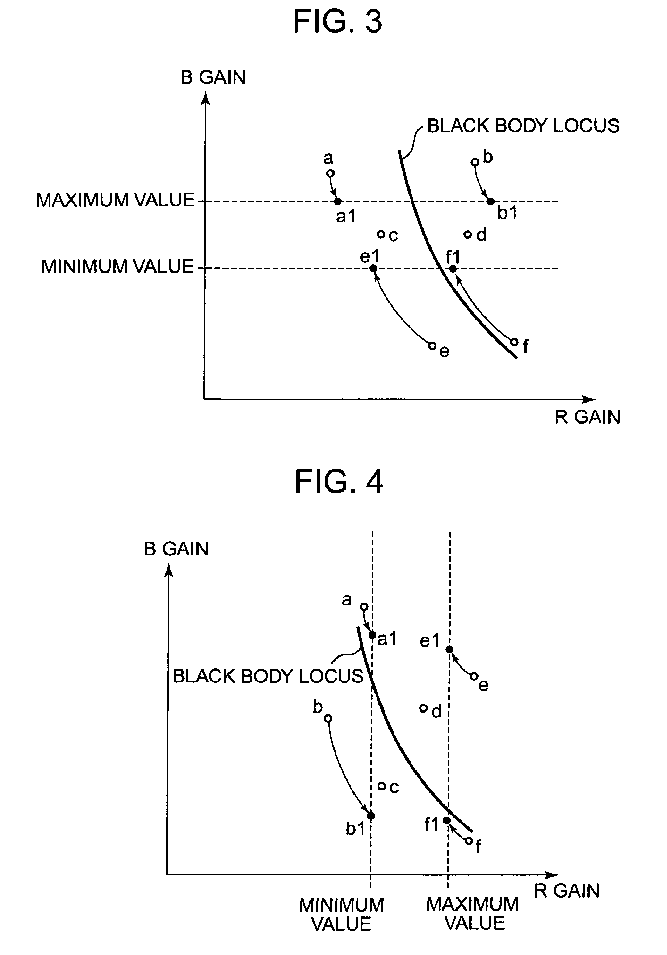

For example, as shown in FIG. 3, in a case where the maximum value and the minimum value are set up as the limit values with regard to the gain value of the B amplifier, receiving the chrominance signal (the B signal [blue]) which is amplified with the gain values of a, b, or e, f, and exceeds the predetermined level, the amplifier gain adjusting unit 108 causes a, b, or e, f to translate parallel along the black body locus on the chromaticity coordinate, and adjusts the gain values of the B amplifier and the R amplifier to the position to be a -> a1, b -> b1, e -> e1, and f -> f1.

Further, as shown in FIG. 4, in a case where the maximum value and the minimum value are set up as the limit values with regard to the gain value of the R amplifier, receiving the chrominance signal (the R signal [red]) which is amplified with the gain values of a, b, or e, f, and exceeds the predetermined level, the amplifier gain adjusting unit 108 causes a, b, or e, f to translate parallel along the black body locus on the chromaticity coordinate, and adjusts the gain value of the B amplifier and the R amplifier to the position to be a -> a1, b -> b1, e -> e1, and f -> f1.

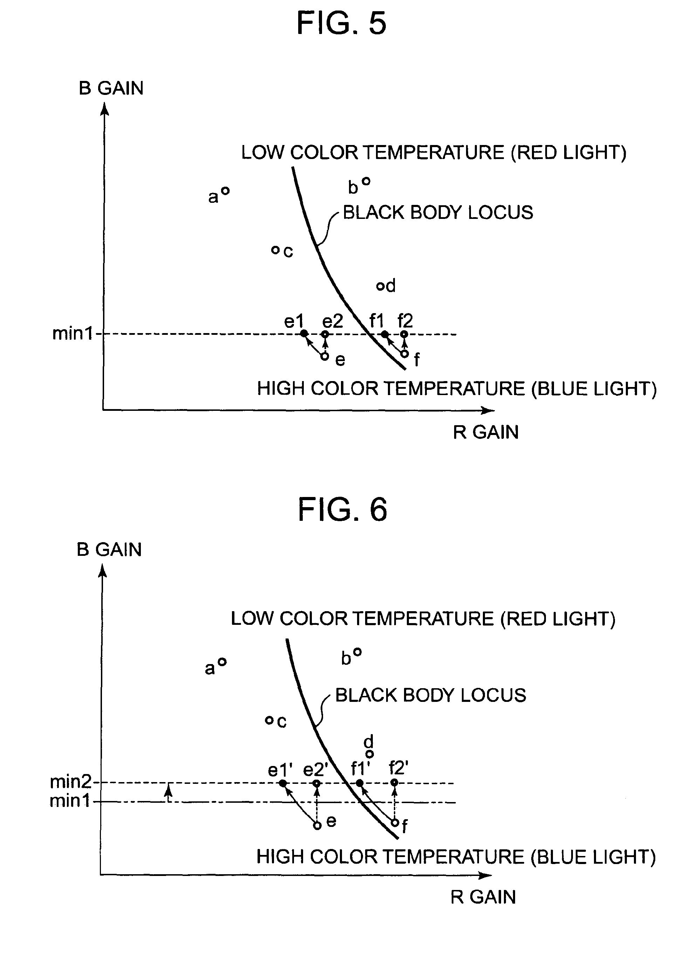

Then, a change in the color of the image captured when the limit value is set up for the WB amplifier in the image pickup apparatus as shown in FIG. 1, will be particularly described with reference to FIG. 5 through FIG. 13.

In addition, although it is possible to individually adjust the gain value of each amplifier which constitutes the WB amplifier, an example in which the gain value of the G amplifier is fixed and the limit value with regard to the B amplifier is set up, will be described in the following.

FIG. 5 through FIG. 13 are graphs showing relationships between the black body locus and the gain values of the B amplifier and the R amplifier, and a-f (white circles in the graphs) illustrates the gain value of each amplifier when a limit value is not set up for the B amplifier and the R amplifier.

If the chrominance signals (B signal [blue] and R signal [red]) are adjusted by the gain values of the a-f, the white balance is properly adjusted and the color of white corresponding to the light source is captured correctly, but a tint of the light source is not reflected. Thus, as the gain value is shifted from the positions of a-f, the chrominance signals are amplified with the gain value shifted from white (white balance), so the image looks as if the whole of the image were subjected to color filtering.

When the limit values (the maximum gain value and the minimum gain value) are set up in the B amplifier, a1-f1 (black circles in the graphs) express the gain values when the gain values of a-f are translated parallel along the black body locus on the chromaticity coordinate and the B amplifier and the R amplifier are adjusted to the position to be predetermined limit values.

Irrespective of the black body locus, a2-f2 (double circles in the graphs) express the gain values in a case of perpendicularly moving a-f to the position to be the limit values (the maximum gain value and the minimum gain value) only set up in the B amplifier, that is, adjusting only the B amplifier.

In addition, the black body locus is expressed with a thick line in the graphs, and expresses that the larger the gain value of the B amplifier is, the more reddish it is and the lower the color temperature is. On the other hand, the larger the gain value of the R amplifier is, the more bluish it is and the higher the color temperature is.

First, with reference to FIG. 5 through FIG. 7, a change in color when limiting the minimum gain value of the B amplifier will be described.

FIG. 5 is a graph showing relationships between the black body locus and the gain values of the B amplifier and the R amplifier, when limiting and setting up the minimum gain value (min) of the B amplifier. In the case of the chrominance signal amplified with the gain value equivalent to a-d, the amplifier gain adjusting unit 108 leaves the gain value of each amplifier as it is, and does not perform the adjustment. But, in the case of the chrominance signal amplified with the gain value equivalent to e or f, the amplifier gain adjusting unit 108 causes e or f to translate parallel along the black body locus on the chromaticity coordinate, and adjusts the B amplifier and the R amplifier so as to be a gain value equivalent to the position e1 or f1, which gives the set-up minimum gain value (min1).

At this stage, if the gain value only of the B amplifier is adjusted (limited), e or f becomes e2 or f2, resulting in a bluish image where only the level of the B signal [blue] is increased, but an actual light source color is in the cyan color direction along the black body locus. Accordingly, if the gain value of the R amplifier is also adjusted to the position of e1 or f1 moved along the black body locus on the chromaticity coordinate, a tint of the cyan color (cold color) of the light source remains in the image slightly.

In such a case, image pickup under a light source with a low color temperature results in an image which does not have a tint of the light source like at the time of image pickup in accordance with the related art white balance (signal levels of R, G, and B are the same). However, in a case of image pickup under a light source having a considerably high color temperature (mini or less), for example, a shade at the time of fine weather, etc., an image in which the tint of the light source remains can be captured.

FIG. 6 shows a graph in a case of further limiting the minimum gain value of FIG. 5. As with FIG. 5, the amplifier gain adjusting unit 108 leaves the gain value as it is, and does not perform the adjustment in the case of the chrominance signal amplified with the gain value equivalent to a-d. In the case of the chrominance signal amplified with the gain value equivalent to e or f, the amplifier gain adjusting unit 108 causes e or f to translate parallel along the black body locus on the chromaticity coordinate, and adjusts the B amplifier and the R amplifier so as to have a gain value equivalent to the position e1' or f1' providing the minimum gain value (min2) which is further limited than min1 of FIG. 5.

At this stage, if the gain value only of the B amplifier is adjusted (limited), e or f moves to the position of e2' or f2', resulting in a more bluish image where only the level of the B signal [blue] is increased and the blueness is stronger than that of FIG. 5.

As with FIG. 5, image pickup under the light source with the low color temperature results in the image which does not have the tint of the light source like the case of image pickup in accordance with the related art white balance (signal levels of R, G, and B are the same). However, in a case of image pickup under a light source having a slightly higher color temperature (between mini and min2), for example, a clouded sky, etc., an image in which the tint of the light source remains can be captured.

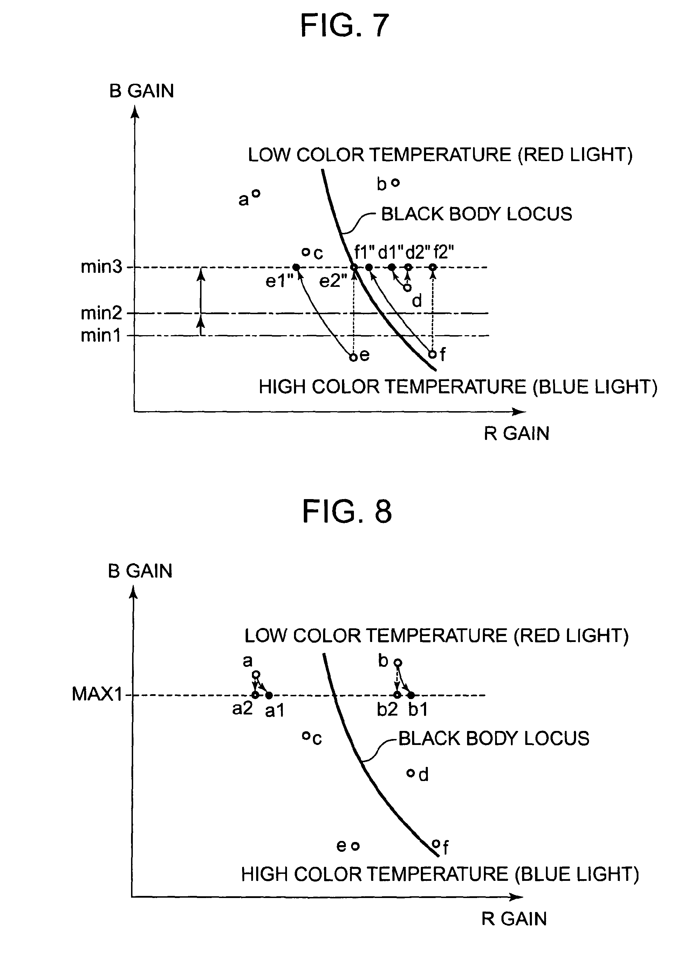

FIG. 7 shows a graph showing a case of further limiting the minimum gain value of FIG. 6. The increased limit value causes the chrominance signal equivalent to d to be a candidate for limitation. In the case of the chrominance signal amplified with the gain value equivalent to a-c, the amplifier gain adjusting unit 108 leaves the gain value of each amplifier as it is, and does not perform the adjustment. In the case of the chrominance signal amplified with the gain value being equivalent to d in addition to e or f, the amplifier gain adjusting unit 108 causes d, e, or f to translate parallel along the black body locus on the chromaticity coordinate, and adjusts the B amplifier and the R amplifier so as to have a gain value equivalent to the position d1", e1" or f1" providing the minimum gain value (min3) which is further limited than min2 of FIG. 6.

At this stage, if the gain value only of the B amplifier is adjusted (limited), d, e, or f moves to d2", e2" or f2", resulting in a bluish image where only the level of the B signal [blue] is increased further. Since there are few differences between d2"and d, the image has blueness slightly, but the blueness of e2" or f2" is much stronger than that of FIG. 6.

Also in this case, as with those of FIGS. 5 and 6, image pickup under the light source with the low color temperature results in the image which does not have the tint of the light source like the time of image pickup in accordance with the related art white balance (signal levels of R, G, and B are the same). However, since the light source having the slightly higher color temperature (between min2 and min3) is also limited, for example, even image pickup under the sunlight from a north direction results in an image in which the tint of the light source remains.

In addition, compared with d, a position corresponding to e or f gives a stronger cyan color (cold color). The stronger the cyan color is, the more suitable the image is to express a scene with much colder color.

Next, with reference to FIG. 8 through FIG. 10, a change in color when limiting the maximum gain value of the B amplifier will be described.

FIG. 8 is a graph showing relationships between the black body locus and the gain values of the B amplifier and the R amplifier, when limiting and setting up the maximum gain value (MAX) of the B amplifier. In the case of the chrominance signal amplified with the gain value equivalent to c-f, the amplifier gain adjusting unit 108 leaves the gain value of each amplifier as it is, and does not perform the adjustment. But, in the case of the chrominance signal amplified with the gain value equivalent to a or b, the amplifier gain adjusting unit 108 causes a or b to translate parallel along the black body locus on the chromaticity coordinate, and adjusts the B amplifier and the R amplifier so as to have a gain value equivalent to the position a1 or b1, which gives the set-up maximum gain value (MAX1).

At this stage, if the gain value only of the B amplifier is adjusted (limited), a or b moves to a2 or b2, resulting in a yellowish image where only the level of the B signal [blue] is decreased, but an actual light source color is in the orange color direction along the black body locus. Then, if the gain value of the R amplifier is also adjusted to the position of a1 or b1 moved along the black body locus on the chromaticity coordinate, a tint of the orange color (warm color) of the light source remains in the image slightly.

In such a case, image pickup under a light source with a high color temperature results in an image which does not have the tint of the light source like the time of image pickup in accordance with the related art white balance (signal levels of R, G, and B are the same). However, in a case of image pickup under a light source having a considerably low color temperature (MAX1 or more), for example, under a sunset etc., an image in which the tint of the light source remains can be captured.

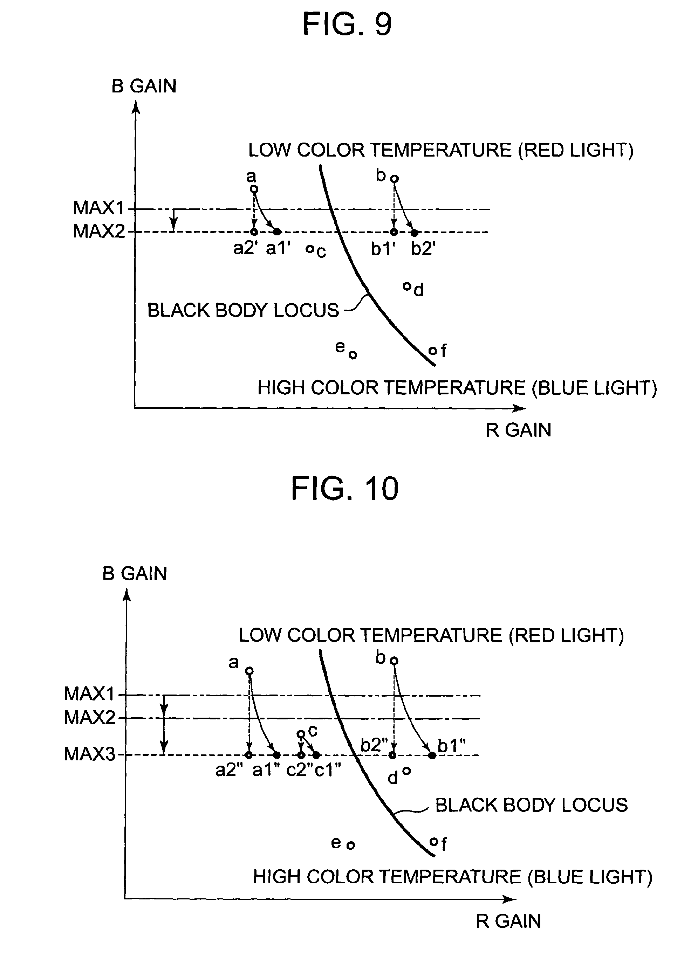

FIG. 9 shows a graph showing a case of further limiting the maximum gain value of FIG. 8. As with FIG. 8, in the case of the chrominance signal amplified with the gain value equivalent to c-f, the amplifier gain adjusting unit 108 leaves the gain value of each amplifier as it is, and does not perform the adjustment. In the case of the chrominance signal amplified with the gain value equivalent to a or b, the amplifier gain adjusting unit 108 causes a or b to translate parallel along the black body locus on the chromaticity coordinate, and adjusts the B amplifier and the R amplifier so as to have a gain value equivalent to the position a1' or b1' providing the maximum gain value (MAX2) which is limited more than MAX1 of FIG. 8.

At this stage, if the gain value only of the B amplifier is adjusted (limited), a or b moves to a2' or b2', resulting in a more yellowish image where only the level of the B signal [blue] is decreased and the yellowness is stronger than that of FIG. 8.

As with FIG. 8, image pickup under the light source with the high color temperature (e, f, etc.) results in the image which does not have the tint of the light source like at the time of image pickup in accordance with the related art white balance (signal levels of R, G, and B are the same). However, at the time of image pickup under a light source having a slightly lower color temperature (between MAX1 and MAX2), for example, a candle light, etc., an image in which the tint of the light source remains can also be captured.

FIG. 10 shows a graph showing a case of further limiting the maximum gain value of FIG. 9. The increased limitation of the maximum value causes the chrominance signal equivalent to c to be a target to be limited. In the case of the chrominance signal amplified with the gain value equivalent to d-f, the amplifier gain adjusting unit 108 leaves the gain value of each amplifier as it is, and does not perform the adjustment. In a case of the chrominance signal amplified with the gain value equivalent to c in addition to a or b, the amplifier gain adjusting unit 108 causes a, b, or c to translate parallel along the black body locus on the chromaticity coordinate, and adjusts the B amplifier and the R amplifier so as to have a gain value equivalent to the position a1", b1" or c1" providing the maximum gain value (MAX3) which is limited further than MAX2 of FIG. 9.

At this stage, if the gain value only of the B amplifier is adjusted (limited), a, b, or c moves to a2", b2" or c2", resulting in a yellowish image where only the level of the B signal [blue] is decreased further. Since there are few differences between c2"and c, the image has yellowness slightly, but the yellowness of a2" or b2" is much stronger than that of FIG. 9.

Also in this case, as with those of FIGS. 8 and 9, image pickup under the light source with the high color temperature (e, f, etc.) results in an image which does not have the tint of the light source like the time of image pickup in accordance with the related art white balance (signal levels of R, G, and B are the same). However, since the light source having the slightly lower color temperature (between MAX2 and MAX3) is also limited, for example, even image pickup under an incandescent lamp results in an image in which the tint of the light source remains.

In addition, compared with c, a position corresponding to a or b gives a stronger orange color (warm color). The stronger the orange color is, the more suitable the image is to express a scene with much warmer color or an evening scene.

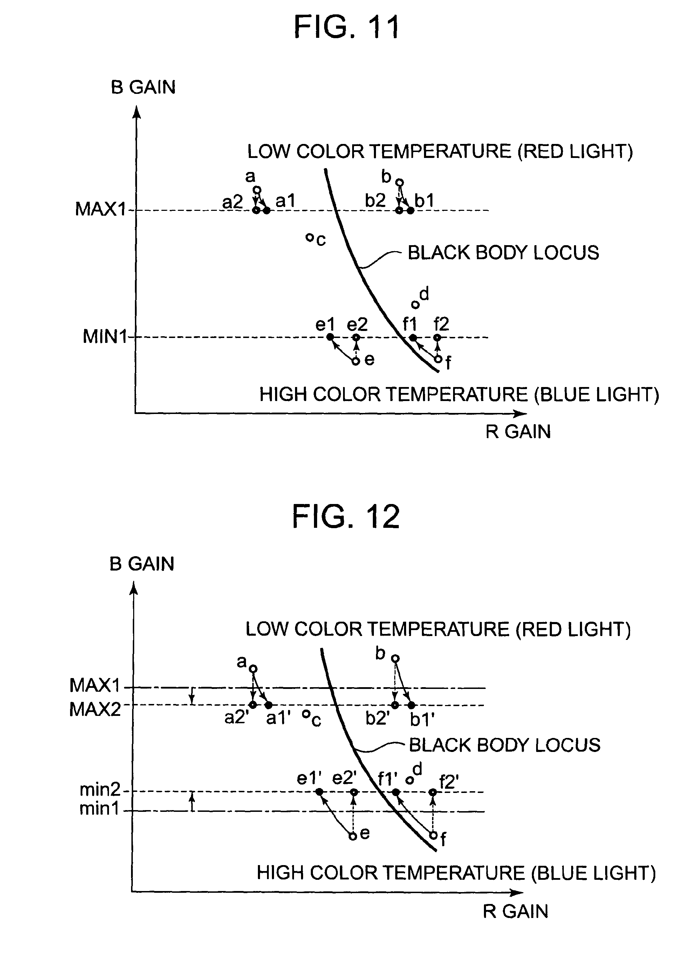

Then, with reference to FIG. 11 through FIG. 13, a change in color when limiting the maximum gain value and the minimum gain value of the B amplifier will be described.

FIG. 11 is a graph showing relationships between the black body locus and the gain values of the B amplifier and the R amplifier, when limiting and setting up the maximum gain value (MAX) and the minimum gain value (min) of the B amplifier. In the case of the chrominance signal amplified with the gain value equivalent to c or d, the amplifier gain adjusting unit 108 leaves the gain value of each amplifier as it is, and does not perform the adjustment. In the case of the chrominance signal amplified with the gain value equivalent to a or b, e or f, the amplifier gain adjusting unit 108 causes a or b, or e or f to translate parallel along the black body locus on the chromaticity coordinate, and adjusts the B amplifier and the R amplifier so as to have a gain value equivalent to the position a1 or b1, which gives the setup maximum gain value (MAX1), or a gain value equivalent to the position e1 or f1, which gives the set-up minimum gain value (min1).

At this stage, if the gain value only of the B amplifier is adjusted (limited), a or b moves to a2 or b2, resulting in a yellowish image where only the level of the B signal [blue] is decreased. On the other hand, e or f moves to e2 or f2, resulting in a bluish image where only the level of the B signal [blue] is increased.

Since an actual light source color is in the direction of the orange or cyan color, each being along the black body locus, if the gain value of the R amplifier is also adjusted to provide the gain value of a1 or b1, or e1 or f1 moved along the black body locus, each results in an image in which the tint of the orange or the cyan color of the light source remains slightly.

In such a case, image pickup under a light source with the high color temperature (mini or less) or the low color temperature (MAX1 or more), for example, under the shade at the time of the fine weather, or the sunset etc., results in capturing an image in which the tint of the light source remains.

FIG. 12 shows a graph showing a case of further limiting the maximum gain value and the minimum gain value of FIG. 11. As with FIG. 11, in the case of the chrominance signal amplified with the gain value equivalent to c or d, the amplifier gain adjusting unit 108 leaves the gain value of each amplifier as it is, and does not perform the adjustment. In the case of the chrominance signal amplified with the gain value equivalent to a or b, e or f, the amplifier gain adjusting unit 108 causes a or b, or e or f to translate parallel along the black body locus on the chromaticity coordinate, and adjusts the B amplifier and the R amplifier so as to have a gain value equivalent to the position a1' or b1', which gives the maximum gain value (MAX2) limited further than MAX1 of FIG. 11, or a gain value equivalent to the position e1' or f1', which gives the minimum gain value (min2) limited further than min1 of FIG. 11.

At this stage, if the gain value only of the B amplifier is adjusted (limited), a or b moves to a2' or b2', resulting in a yellowish image where only the level of the B signal [blue] is decreased. On the other hand, e or f moves to e2' or f2', resulting in a more bluish image where only the level of the B signal [blue] is increased.

In such a case, image pickup under the light source with the slightly higher color temperature (between mini and min2) or the slightly lower color temperature (between MAX1 and MAX2), for example, under the clouded sky, the candle light, etc., results in capturing an image in which the tint of cyan color or the orange color of the light source remains.

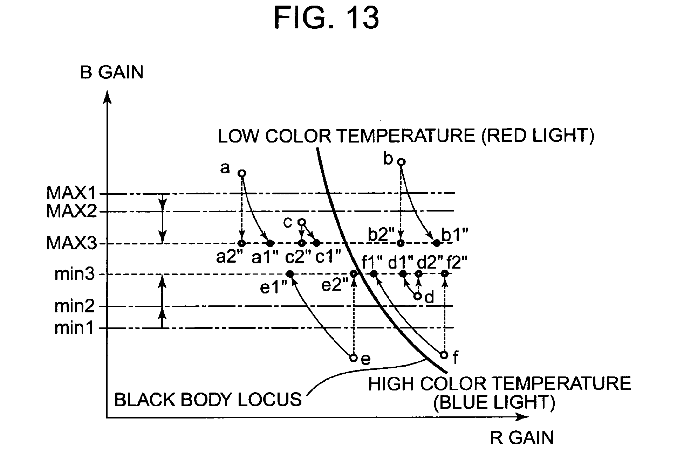

FIG. 13 shows a graph showing a case of further limiting the maximum gain value and the minimum gain value of FIG. 12. The increased limiting value causes the chrominance signal equivalent to c or d to be a target to be limited. In the case of the chrominance signal amplified with the gain value equivalent to c or d in addition to a or b, or e or f, the amplifier gain adjusting unit 108 causes a, b, c, d, e, f to translate parallel along the black body locus on the chromaticity coordinate, and adjusts the B amplifier and the R amplifier so as to have a gain value equivalent to the position a1", b1", c1" which gives the maximum gain value (MAX3) limited further than MAX2 of FIG. 12, or a gain value equivalent to the position d1", e1", f1", which gives the minimum gain value (min3).

At this stage, if the gain value only of the B amplifier is adjusted (limited), a, b, and c respectively move to a2", b2", and c2", resulting in a yellowish image where only the level of the B signal [blue] is further decreased. On the other hand, d, e, and f respectively move to d2", e2", and f2", resulting in a bluish image where only the level of the B signal [blue] is further increased.

In such a case, at the time of image pickup under the light source with the slightly higher color temperature (between min2 and min3) or the slightly lower color temperature (between MAX2 and MAX3), for example, under the sunlight from the north direction or the incandescent lamp, an image in which the tint of cyan color or the orange color of the light source remains can be captured.

In addition, compared with c, the position corresponding to a or b gives the stronger orange color (warm color). The stronger the orange color is, the more suitable the image is to express the scene with much warmer color or the evening scene. Compared with d, the position corresponding to e or f gives the stronger cyan color (cold color). The stronger the cyan color is, the more suitable the image is to express the scene with much cold color.

It should be understood by those skilled in the art that various modifications, combinations, sub-combinations and alterations may occur depending on design requirements and other factors insofar as they are within the scope of the appended claims or the equivalents thereof.

## Claims

1. An image pickup apparatus capable of adjusting a white balance by adjusting a level of a chrominance signal constituting a color image, comprising :
gain setup means (107) setting up a limit value for a gain value which adjusts a level of said chrominance signal ;
gain adjusting means (108) having a black body locus, as data, which indicates a locus of a change in color temperature of a full radiator on a chromaticity coordinate, and capable of adjusting said gain value ; and
chrominance signal amplifying means (106) amplifying the level of said chrominance signal in accordance with said gain value adjusted by said gain adjusting means (108),
wherein, when amplifying a chrominance signal exceeding a predetermined level in accordance with the limit value set up by said gain setup means (107), said gain adjusting means (108) causes said gain value of said chrominance signal amplifying means (106) applied to the chrominance signal to translate parallel along said black body locus on said chromaticity coordinate, and adjusts to a position to be said set-up limit value.

2. The image pickup apparatus as claimed in claim 1, wherein said gain setup means (107) is capable of setting up either or both of the maximum value and the minimum value of said gain value, as said limit value.

3. An image pickup method capable of adjusting a white balance by adjusting a level of a chrominance signal constituting a color image, comprising :
a gain setup step of setting up a limit value for a gain value which adjusts a level of said chrominance signal ;
a gain adjusting step of having a black body locus, as data, which indicates a locus of a change in color temperature of a full radiator on a chromaticity coordinate, and adjusting said gain value ; and
a chrominance signal amplifying step of amplifying the level of said chrominance signal in accordance with said gain value adjusted in said gain adjusting step,
wherein when amplifying a chrominance signal exceeding a predetermined level in accordance with the limit value set up in said gain setting step, said gain adjusting step causes said gain value in said chrominance signal amplifying step applied to the chrominance signal to translate parallel along said black body locus on said chromaticity coordinate, and adjusts to a position to be said set-up limit value.
